# EUROPÄISCHE PATENTSCHRIFT

(11) **EP 3 270 146 B1**
(45) Veröffentlichungstag und Bekanntmachung des Hinweises auf die Patenterteilung: **11.12.2019**
(21) Anmeldenummer: 16179783.2
(22) Anmeldetag: 15.07.2016
(51) Int. Cl.: G01N 27/02, G01N 27/403, G01N 27/416

(54) **ELEKTROCHEMISCHE TESTZELLE**
ELECTROCHEMICAL TEST CELL
CELLULE D'ESSAI ELECTROCHIMIQUE

(43) Veröffentlichungstag der Anmeldung: 17.01.2018
(73) Patentinhaber: EL-CELL GmbH, 21079 Hamburg (DE)
(72) Erfinder: Hahn, Michael, 22589 Hamburg (DE); Hahn, Matthias, 30890 Barsinghausen/Kirchdorf (DE)
(74) Vertreter: Müller Verweyen

(56) Entgegenhaltungen:
- EP-A1- 0 548 751
- US-A- 5 546 317
- US-A1- 2010 122 905

## Beschreibung

Die Erfindung betrifft eine elektrochemische Testzelle mit den Merkmalen des Oberbegriffs von Anspruch 1.

In der Forschung und Entwicklung von elektrochemischen Speicherzellen, beispielsweise Lithium-Ionen-Akkus, werden elektrochemische Testzellen zur Charakterisierung der Batteriematerialien verwendet. Die Testzellen weisen externe elektrische Anschlüsse auf, die mit in wechselseitigem Elektrolytkontakt stehenden internen Elektroden verbunden sind. Zur Messung werden die Testzellen in entsprechende Einsätze einer Testzellenstation eingesetzt und darin arretiert, wodurch ein elektrischer Kontakt der externen Anschlüsse mit elektrischen Verbindungsmitteln hergestellt wird, über die die Testzellen mit einer Batterietestvorrichtung verbindbar sind. Über die externen Anschlüsse werden mittels der Batterietestvorrichtung elektrische Kennlinien zur Charakterisierung der verwendeten Batteriematerialien aufgenommen, beispielsweise Strom-/Spannungskennlinien, Konstantstrom-Zyklen, Impedanzspektren.

Eine herkömmliche, unter dem Namen ECC-Ref bekannte elektrochemische Testzelle der Anmelderin umfasst eine Elektrodenanordnung mit einer Arbeitselektrode, einer Gegenelektrode und einer elektrolytgetränkten Separatorschicht, eine Hülse zum Halten der Elektrodenanordnung, einen von einer Seite in die Hülse einschiebbaren Stahlzylinder als ersten Stromsammler und eine die Hülse umgebende topfförmige Basis aus Edelstahl als zweiten Stromsammler. In der Hülse ist eine Durchführungsbohrung vorgesehen, in die vom Anwender meist unter Zuhilfenahme eines speziellen Werkzeugs zunächst das Referenzmaterial, beispielsweise metallisches Lithium, eingepresst wird. Dabei soll das Referenzmaterial möglichst genau bis zur Innenseite der Hülse reichen. Anschließend wird die mit Referenzmaterial präparierte Hülse von oben in die topfförmige Basis aus Edelstahl eingeführt und eine Vielzahl von weiteren Schritten durchgeführt. Die Präparation der Hülse mit dem Referenzmaterial ist zeitaufwändig und in erheblichem Maße vom Geschick des Anwenders abhängig.

Eine herkömmliche Testzellenstation der Anmelderin zur Aufnahme von bis zu fünf Testzellen ist unter dem Namen ECC-Stand bekannt. Die Testzellenstation ist über zwei Kabel mit einer Anschlussbox (Terminal Box) verbunden, die Anschlussbuchsen zum Anschluss an eine elektronische Steuer- und Signalverarbeitungseinrichtung (Batterietester bzw. Mehrkanalpotentiostat) aufweist. In der Terminal Box kann optional ein interner USB Datenlogger vorgesehen sein.

Eine weitere Testzellenstation der Anmelderin zur Aufnahme von bis zu 16 Testzellen ist unter dem Namen "PAT-Tray" bekannt. Da die Messung unter definierten Temperaturbedingungen durchzuführen ist, ist es bekannt, die Testzellenstation während der Messung in eine separate, verschließbare Temperaturkammer in der Art eines Kühlschranks einzustellen. Mit einer aufwändigen Kabeldurchführung durch die Temperaturkammer nach außen wird die Testzellenstation über eine der Anzahl der Testzelleneinsätze entsprechende Anzahl von Kabeln mit einem externen Batterietester verbunden, der außerhalb der Temperaturkammer steht. Beim elektrischen Test der Zellen kann es erforderlich sein, die individuelle Verbindung zwischen den Anschlüssen der Testzelle und den entsprechenden Anschlüssen des zugeordneten Batterietesterkanals zu ändern. Solche Änderungen der Testzellenbeschaltung erfolgen manuell und werden manuell dokumentiert, was aufwändig und fehleranfällig ist.

Aus der WO 2015/124198 A1 der Anmelderin ist ferner eine elektrochemische Testzelle bekannt, welche in der Testzellenstation "PAT-Tray" der Anmelderin verwendbar ist. Die Testzelle weist in ihrem Grundaufbau einen ersten und zweiten Stromsammler und eine zwischen dem ersten und dem zweiten Stromsammler angeordnete Elektrodenanordnung auf. Die Elektrodenanordnung umfasst eine Arbeitselektrode, eine Gegenelektrode und eine Referenzelektrode, welche das zu prüfende Batteriematerial beinhaltet. Die individuelle Präparierung und Befüllung der Elektrodenanordnung muss von dem Anwender protokolliert werden, wozu die Daten, insbesondere die Zusammensetzung und die Menge des Batteriematerials bzw. die Art der Elektroden, entweder unmittelbar auf die Testzelle geschrieben werden oder handschriftlich in ein zugehöriges Datenblatt eingetragen werden, wobei zur Verkürzung der zu vermerkenden Daten und Bezeichnungen auch Abkürzungen verwendet werden können.

Aus der Druckschrift US 5,546,317 A ist ferner eine elektronische Testzelle mit einem nichtflüchtigen elektronischen Datenspeicher bekannt.

Vor diesem Hintergrund liegt der Erfindung die Aufgabe zugrunde, eine elektrochemische Testzelle bereitzustellen, mit denen die Vorbereitung der Testzelle und die Testdurchführung vereinfacht werden können.

Zur Lösung der Aufgabe wird eine elektrochemische Testzelle mit den Merkmalen des Anspruchs 1. Weitere bevorzugte Weiterbildungen der Erfindung sind in den Unteransprüchen, den Figuren und der zugehörigen Beschreibung enthalten.

Gemäß Anspruch 1 wird vorgeschlagen, dass in der elektrochemischen Testzelle ein nichtflüchtiger, digitaler elektronischer Datenspeicher vorgesehen ist. Der nichtflüchtige, elektronische Speicher liefert den Vorteil, dass die Testzelle selbst Träger der für die Präparierung und die Durchführung der weiteren Tests erforderlichen Daten ist. In dem nichtflüchtigen, digitalen, elektronischen Datenspeicher können die das zu testende Batteriematerial kennzeichnenden Daten, wie z.B. Zusammensetzung, das Gewicht oder auch Daten des Tests wie z.B. Datum, Zeitdauer, oder weitere Versuchsparameter wie Druck, Temperatur oder Daten der den Versuch durchführenden Person oder der Testsequenz oder auch nur ein die Testzelle selbst individualisierender Code gespeichert werden. Die Daten müssen damit nicht mehr auf der Testzelle oder einem Datenblatt protokolliert werden, und sind stattdessen in der Testzelle selbst in Form von digitalen, weiter verarbeitbaren Daten in dem Datenspeicher abgelegt. Dabei ist es von besonderer Bedeutung, dass es sich um einen nichtflüchtigen Datenspeicher handelt, so dass die Daten auch dann in der Testzelle gespeichert bleiben, wenn der Datenspeicher nicht an eine externe Energiequelle angeschlossen ist. Ferner können die Daten nach dem Einsetzen in eine Testzellenstation z.B. vor der Durchführung des Tests auch aus dem Datenspeicher ausgelesen oder aus dem Versuch gewonnene Daten in dem Datenspeicher zu einer späteren Auswertung abgelegt werden. Die Testzelle ist damit nicht nur Träger des zu testenden Batteriematerials, sondern zusätzlich auch Träger der das Batteriematerial kennzeichnenden Daten. Da es sich um einen digitalen, elektronischen Speicher handelt, sind die Daten in digitaler Form abgelegt und können damit sehr einfach weiterverarbeitet werden. Ferner können die Daten z.B. auch wichtige für die Durchführung der Tests erforderliche Informationen enthalten, welche dann aufgrund der digitalen Form ausgelesen und zur Steuerung von übergeordneten oder anschließend anzusteuernden Einheiten des Versuchsaufbaus weiter verwendet werden können. Ferner können auch während des Versuchs Daten in dem Speicher abgelegt oder aus diesem ausgelesen werden, wodurch die Versuchsdurchführung und insbesondere die Protokollierung der Daten erheblich vereinfacht werden kann. Ferner können die Daten in dem Datenspeicher mit einer sehr hohen Genauigkeit und dauerhaft gespeichert werden, ohne dass die Gefahr besteht, dass die Daten durch externe Einflüsse verändert werden. Aufgrund der hohen Speicherkapazität moderner Datenspeicher kann ferner eine erheblich größere Menge an Daten gespeichert werden, als dies durch das bisher durchgeführte handschriftliche Protokollieren möglich war.

Ferner ist an der Testzelle auch wenigstens ein von außen zugänglicher, mit dem Datenspeicher elektrisch verbundener oder verbindbarer Kontakt vorgesehen, wodurch eine funktionssichere Datenübertragung aus und in den Datenspeicher ermöglicht wird. Eine solche Übertragung der Daten über einen Kontakt bietet sich insofern an, da auch die Elektroden bereits über elektrische Kontakte kontaktiert werden und deshalb bereits aus diesem Grunde eine Vorausrichtung der Testzelle erforderlich ist. Der oder die Kontakte des Datenspeichers bilden damit lediglich zusätzliche Kontakte.

Weiter sind eine formcodierte Aufnahme und ein Rahmenteil mit einer an die Form der Aufnahme angepassten Formgebung und einer nichtrunden Ausnehmung vorgesehen, und der nichtflüchtige Speicher auf einem Trägerteil angeordnet ist, welches eine an die Form der Ausnehmung angepasste Außengeometrie aufweist und in der Ausnehmung angeordnet ist. Durch die formcodierte Aufnahme wird eine Anordnung des Rahmenteils in ausschließlich einer Ausrichtung ermöglicht, während die unrunde Ausnehmung wiederum die Anordnung des Trägerteils in ausschließlich einer oder in verschiedenen definierten Ausrichtungen in dem Rahmenteil vorgibt, wodurch gleichfalls die Ausrichtung des Trägerteils zu der Aufnahme der Testzelle und damit zu der Testzelle als Bauteil vorgegeben wird.

Eine solche Vorgabe der Ausrichtung ist von besonderem Vorteil, weil der Kontakt an dem Trägerteil angeordnet ist. Damit wird neben dem an dem Trägerteil angeordneten Datenspeicher auch der mit diesem verbundene elektrische Kontakt in einer definierten Ausrichtung an der Testzelle positioniert. Damit kann die Testzelle mit einer entsprechenden äußeren formcodierten Formgebung so ausgebildet werden, dass sie beim Einsetzen in einer Aufnahme einer Testzellenstation aufgrund der Vorausrichtung automatisch mit dem Kontakt an einem in der Aufnahme entsprechend positionierten Gegenkontakt elektrisch kontaktierend zur Anlage gelangt.

Als nichtflüchtige Datenspeicher können z.B. ein EPROM, PROM, Flash Memory oder Solid State Storage Device verwendet werden, wobei als Datenspeicher besonders bevorzugt ein EEPROM verwendet wird. EEPROM's werden bevorzugt zur Speicherung kleinerer Datenmengen verwendet, bei denen die Information auch ohne anliegende Versorgungsspannung erhalten bleiben muss.

Ferner kann der nichtflüchtige Speicher bevorzugt für eine Drahtloskommunikation eingerichtet sein, welche z.B. durch eine RFID-Technik oder Transponderlösung verwirklicht sein kann. Durch die Drahtloskommunikation kann der Datenspeicher innerhalb der Testzelle angeordnet werden, ohne dass er von außen zugänglich sein muss. Dadurch wird der Datenspeicher gegen äußere mechanische Einwirkungen geschützt. Ferner können die Daten auch über einen Abstand von außen ausgelesen oder eingelesen werden, was insbesondere deshalb von Vorteil ist, da die vorzubereitende Testzelle dadurch in einem geschlossenen Raum mit definierten Raumluftbedingungen wie z.B. einer Handschuhbox vorbereitet werden kann, und die Daten dennoch durch eine außerhalb des geschlossenen Raumes angeordnete Einrichtung ausgelesen oder eingelesen werden können.

Ferner können in der elektrochemischen Testzelle ein den Druck in dem zu prüfenden Batteriematerial detektierender Drucksensor und/oder ein die Temperatur des zu prüfenden Batteriematerials detektierender Tempertatursensor vorgesehen sein. Durch den Drucksensor und den Temperatursensor können der Druck und die Temperatur in dem in der Testzelle angeordneten Batteriematerial unmittelbar gemessen und die gemessenen Daten in dem Datenspeicher abgelegt werden. Dabei kann der Temperatursensor auf dem Trägerteil angeordnet sein und muss in der Annahme einer gleichmäßigen Temperaturverteilung nicht zwingend mit dem Batteriematerial in Kontakt stehen. Der Drucksensor sollte hingegen mit der Messmembran in Kontakt mit dem Innenraum stehen, in dem das Batteriematerial aufgenommen ist. Gleiches gilt für andere denkbare Sensoren, welche spezifische Kenngrößen des Batteriematerials detektieren sollen und damit möglichst unmittelbar in Kontakt mit dem Batteriematerial stehen sollen.

Sofern der Drucksensor und/oder der Temperatursensor auf dem Trägerteil angeordnet sind, kann die Baugruppe des Trägerteils mit dem Datenspeicher und dem Drucksensor und/oder Temperatursensor als Baugruppe vormontiert und dann an der Testzelle befestigt werden. Ferner können so unter Verwendung eines einheitlichen Rahmenteils und verschieden bestückter Trägerteile Testzellen unterschiedlicher Ausstattung mit und ohne Drucksensor und/oder Temperatursensor verwirklicht werden. Ferner können auf dem Trägerteil bedarfsweise weitere Sensoren vorgesehen werden, sofern die durchzuführenden Tests solche erfordern.

Ferner können der Drucksensor und/oder der Temperatursensor mit einem an dem Trägerteil angeordneten, von außen zugänglichen elektrischen Kontakt verbunden sein, so dass die von den Sensoren detektierten Daten auch unmittelbar ausgelesen werden können, ohne dass eine Speicherung in dem Datenspeicher erforderlich ist.

Weiter wird eine Testzellenstation zur Aufnahme wenigstens einer erfindungsgemäßen elektrochemischen Testzelle vorgeschlagen, in der ein serieller Datenbus vorgesehen ist, welcher zu einem Datenaustausch mit dem nichtflüchtigen Datenspeicher in Verbindung bringbar ist. Der Vorteil der Verwendung eines seriellen Datenbusses liegt darin, dass der Datenspeicher, die eventuell in der Testzelle vorgesehenen Sensoren, sowie eine Eingabeeinrichtung und weitere externe Messeinrichtungen, wie z.B. eine Waage mit einem sehr einfachen Schaltungsaufbau bei einer gleichzeitig ausreichenden Datenübertragungsrate miteinander verbunden werden können. Ein bevorzugter serieller Datenbus ist z.B. ein unter dem Namen I2C-Bus bekannter Zweidrahtbus, welcher neben der Masse- und Versorgungsleitung lediglich zwei bidirektionale Leitungen benötigt. Dabei wird die eine Leitung als SDA-Leitung bezeichnet und dient zur seriellen Datenübertragung, während die andere Leitung als SCL-Leitung bezeichnet wird und zur Sendung der Takt-Impulse dient. Dabei reicht es aus, wenn in der Testzellenstation nur ein Abschnitt eines seriellen Datenbusses vorgesehen ist, welcher durch einen Anschluss an einen übergeordneten seriellen Datenbus anschließbar ist. Sofern die Testzelle z.B. mehrere Sensoren aufweist, können die von den Sensoren ermittelten Messwerte dabei bevorzugt über eine einzige Schnittstelle übertragen werden, statt wie bisher über mehrere Kontaktstellen.

Dabei sind in der Testzellenstation bevorzugt Gegenkontakte vorgesehen, welche derart angeordnet sind, dass sie in der Testposition der Testzelle mit korrespondierenden Kontakten der Testzelle in einer elektrischen Verbindung stehen. Durch die Gegenkontakte wird der serielle Datenbus beim Einsetzen der Testzelle mit dem Datenspeicher und den Sensoren in der Testzelle verbunden, sofern solche vorhanden sind. Dabei ist es von besonderem Vorteil, wenn die Gegenkontakte derart positioniert sind, dass sie beim Einsetzen der Testzelle in eine formcodierte Aufnahme der Testzellenstation und einer dadurch erzwungenen Ausrichtung der Testzelle automatisch mit den Kontakten der Testzelle elektrisch kontaktiert werden.

Weiter wird eine Arbeitsstation mit einer Handschuhbox zur Vorbereitung einer elektrochemischen Testzelle nach einem der Ansprüche 1 bis 7 vorgeschlagen, wobei gemäß dem Grundgedanken vorgeschlagen wird, dass in der Handschuhbox eine Eingabeeinrichtung zur Eingabe von Daten in den nichtflüchtigen Datenspeicher der Testzelle vorgesehen ist. Die Handschuhbox ist mit einem für die Vorbereitung der Testzelle und insbesondere hinsichtlich des Batteriematerials neutralem Gas wie z.B. Inertgas gefüllt und zur Außenseite gasdicht abgeschlossen. An der Außenwand der Handschuhbox sind Handschuhe angeordnet, in welche der Anwender mit den Händen eingreifen kann, so dass er bestimmte Handlungen in der gasdichten Handschuhbox vornehmen kann. Aufgrund der Anordnung der Eingabeeinrichtung in der Handschuhbox können die Daten unmittelbar in der Handschuhbox in den nichtflüchtigen Datenspeicher eingegeben werden, ohne dass der Anwender die Testzelle dazu aus der Handschuhbox entnehmen muss. Bisher wurde die Testzelle erst nach der vollständigen Befüllung und Vorbereitung entnommen und beschriftet, so dass die Protokollierung zwangsläufig mit einem zeitlichen Abstand zu den vorbereitenden Handlungen vorgenommen wurde. Hieraus resultiert zwangsläufig eine Fehlerquelle, wenn der Anwender Daten vergisst oder unbewusst vertauscht. Sofern die Daten unmittelbar protokolliert werden sollen, musste der Anwender die Hände nach jeder Handhabung aus den Handschuhen nehmen und die Daten extern in einem Datenprotokoll notieren, wodurch die Vorbereitung der Testzelle erheblich verkompliziert wird. Aufgrund der erfindungsgemäßen Lösung können die Daten unmittelbar in der Handschuhbox eingegeben werden, wodurch die erforderliche Dateneingabe halbiert wird, da die bisher erforderliche Dateneingabe außerhalb der Handschuhbox entfällt.

Weiter wird vorgeschlagen, dass in der Handschuhbox eine Waage vorgesehen ist, welche signaltechnisch an den Datenspeicher anschließbar ist. Die Waage dient zum Wiegen des Gewichts des in der Testzelle angeordneten Batteriematerials, wobei das Gewicht aufgrund der signaltechnischen Verbindung zu dem Datenspeicher direkt nach dem Verfüllen in dem Datenspeicher gespeichert werden kann. Eine weitere Eingabe der Daten ist dabei nicht erforderlich, kann aber zusätzlich vorgenommen werden, wenn z.B. die Befüllung einer Testzelle abgeschlossen ist und die Befüllung einer weiteren Testzelle vorgenommen werden soll.

Die Erfindung wird im Folgenden anhand bevorzugter Ausführungsformen unter Bezugnahme auf die beigefügten Figuren erläutert. Dabei zeigt
- Fig. 1 bis 3: eine Testzelle und eine Testzellenstation nach dem Stand der Technik, und
- Fig. 4 bis 6: eine erfindungsgemäß weiterentwickelte Testzelle und ein Ausschnitt einer Testzellenstation, und
- Fig. 7 und 8: eine Innenzelle einer im Stand der Technik bekannten Testzelle, und
- Fig. 9: eine Arbeitsstation mit einer Handschuhbox, und
- Fig. 10: ein Netzwerk mit einem seriellen Datenbus.

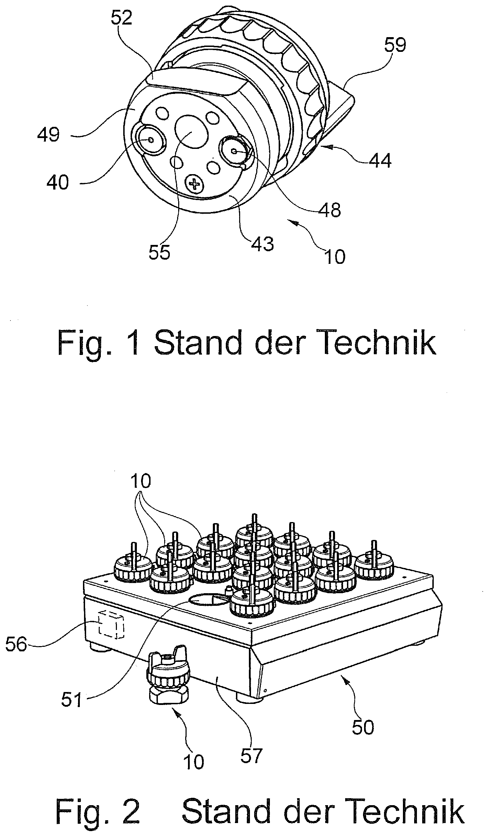

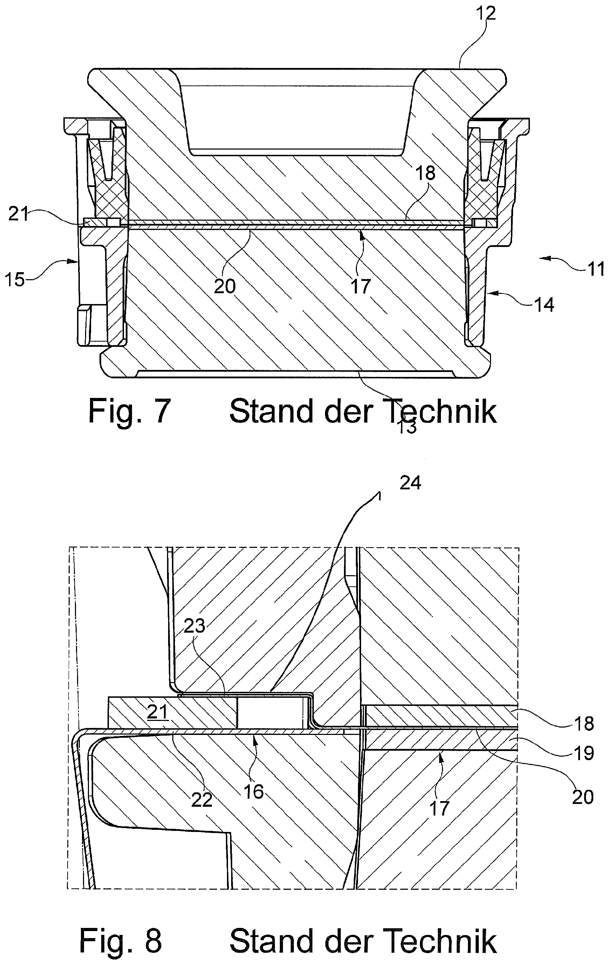

In den Figuren 1 bis 3 ist eine im Stand der Technik aus der WO 2015/124198 A1 bekannte elektrochemische Testzelle 10 mit einer Testzellenstation 50 zu erkennen. Die Testzelle 10 umfasst ferner eine in den Figuren 7 und 8 vergrößert dargestellte Innenzelle 11. Die Innenzelle 11 umfasst einen ersten Stromsammler 12 aus einem batterietauglichen Metall, einen zweiten Stromsammler 13 aus einem batterietauglichen Metall, einen Referenzelektrodeneinsatz 14 und eine Elektrodenanordnung 17 mit einer Arbeitselektrode 18, einer Gegenelektrode 19 und einem die Arbeitselektrode 18 von der Gegenelektrode 19 trennenden, elektrolytgetränkten Separator 20. Der Referenzelektrodeneinsatz 14 umfasst eine insgesamt rohrförmige Hülse 15 und eine Referenzelektrodenanordnung 16, die am besten ebenfalls in Figur 8 erkennbar ist. Die Stromsammler 12 und 13 bestehen vorteilhaft aus einem batteriegeeigneten Metall, insbesondere Edelstahl (beispielweise 1.4404), Kupfer (beispielsweise E-Cu58, W.Nr. 2.0060) oder Aluminium (beispielsweise AL 99.85 bzw. EN AW-1085). Die Stromsammler 12 und 13 können jeweils als Mehrwegteil (insbesondere im Fall von Edelstahl) oder Einwegteil (insbesondere im Fall von Cu, Al) ausgeführt sein. Das Gehäuse der Testzelle 10 umgibt die Innenzelle 11 (Stromsammler 12, 13 und Elektrodenanordnung 17) und dichtet diese mittels entsprechender Dichtungen hermetisch gegenüber Umgebungseinflüssen ab.

Die Referenzelektrodenanordnung 16 umfasst einen Trägerring 21, einen Kontaktring 22 und eine ringförmige, elektrolytgetränkte Membran 23. In der vorliegenden Ausführungsform werden die ringförmige Membran 23 und der Separator 20 von einem einheitlichen Membranelement 24 gebildet. Das Membranelement 24 kann beispielsweise eine dünne poröse Kunststofffolie, insbesondere eine poröse Polyolefinfolie sein. Andere Ausführungen sind möglich und werden später erläutert.

Der Trägerring 21 dient zum Aufnehmen des Batteriematerials, beispielsweise metallisches Lithium, und weist zu diesem Zweck eine Vielzahl von Taschen 38 auf, die vorzugsweise gleichmäßig über den Umfang des Trägerrings 21 verteilt sind. Die Taschen 38 sind vorzugsweise axialparallele Durchbohrungen durch den Trägerring 21 und können radial nach innen offen sein. Der mit dem Batteriematerial gefüllte Trägerring 21 bildet eine ringförmige Referenzelektrode 46.

Der metallische Kontaktring 22, der in elektrischem Kontakt mit dem Trägerring 21 steht, hat zwei Funktionen. Der Kontaktring 22 dient einerseits zur Herstellung des elektrischen Kontakts des Batteriematerials mit einem externen elektrischen Referenzanschluss 40 der Testzelle 10 (siehe Figur 1) und kann angepasst an diese Funktion gestaltet sein. Beispielsweise kann der Kontaktring 22 dünner sein als der Trägerring 21. Der Kontaktring 22 kann vorteilhaft eine abgewinkelte Lasche als Federkontaktzunge zur elektrischen Verbindung mit dem externen elektrischen Referenzanschluss 40 aufweisen.

Die als "PAT-Cell" bezeichnete elektrochemische Testzelle 10 gemäß der Figur 1 umfasst einen vorzugsweise metallischen, insbesondere topfförmigen Sockel 43 beispielsweise aus Edelstahl und eine Deckelanordnung 44, die mit dem Sockel 43 über einen Zwischendeckel beispielsweise mittels eines Bajonettverschlusses verbindbar ist und einen Innendeckel umfasst. Die Innenzelle 11 wird in den Sockel 43 eingesetzt und die Deckelanordnung 44 wird auf den Sockel 43 aufgesetzt und mit diesem verbunden. Die Deckelanordnung 44 umfasst ein über eine Handhabe 59 zu betätigendes Schraubelement, hier in Form eines Schraubdeckels, durch den der Innendeckel unter Komprimierung eines zwischen Innendeckel und Sockel 43 vorgesehenen Dichtrings, beispielsweise aus PE, auf den Sockel gedrückt wird. Sockel 43, Innendeckel und Dichtung bilden somit ein luftdicht abgedichtetes Innengehäuse, durch welches die Innenzelle 11 hermetisch nach außen abgedichtet ist. Die funktionelle Trennung der Deckelanordnung 44 in ein Verbindungsteil zum Verbinden der Deckelanordnung 44 mit dem Sockel 43 und ein Schraubelement erlaubt die manuelle Erzeugung einer für die Abdichtung des Innengehäuses erforderlichen Kraft von einigen 1000 N mittels des Schraubelements. Über die externen Anschlüsse, nämlich Referenzanschluss 40, Kontaktanschluss 48 für die Arbeitselektrode 18 und Kontaktanschluss 49 für die Gegenelektrode 19 über den Sockel 43 (oder umgekehrt) können Lade- bzw. Entladekurven der elektrochemischen Zelle 10 aufgenommen und Impedanzmessungen durchgeführt werden.

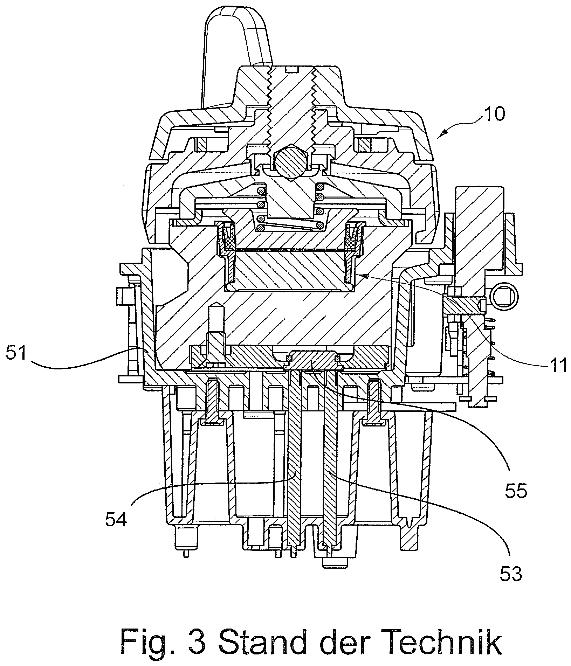

In der im Stand der Technik unter dem Namen "PAT-Tray" verwendeten Testzellenstation 50, ist eine Mehrzahl von hier sechzehn Aufnahmen 51 für jeweils eine elektrochemische Testzelle 10 vorgesehen. Die Aufnahmen 51 sind vorteilhaft in einer Oberseite des Gehäuses 57 angeordnet und können beispielsweise aus Kunststoff bestehen. Eine Testzellenaufnahme 51 mit einer darin angeordneten Testzelle 10 ist im Querschnitt in Figur 3 gezeigt. Die Testzelle 10 ist mit definierter Orientierung in die Aufnahme 51 einsetzbar, was beispielsweise durch ein entsprechendes Profil des Sockels 43 mit einer planen seitlichen Oberfläche 52 oder mittels anderer Orientierungsmittel erreicht werden kann. Im eingesetzten Zustand ist die Testzelle 10 mittels einer nicht gezeigten Verriegelungsmechanik in der entsprechenden Aufnahme 51 fixierbar. Unterhalb der Aufnahme 51 sind mehrere doppeltwirkende Federkontaktstifte vorgesehen, von denen zwei Federkontaktstifte 53 und 54 erkennbar sind. Die Federkontaktstifte liegen bei in die Aufnahme 51 eingesetzter Zelle 10 einerseits unter Federvorspannung an den externen Kontaktanschlüssen 40, 48, 49, 55 der Zelle 10 und andererseits unter Federvorspannung an Kontakten einer in der Station 50 vorgesehenen Platine an. Vorzugsweise ist an der Unterseite der Testzelle 10 ein metallisches Kontaktelement 55, beispielsweise ein Kontaktknopf aus Edelstahl, vorgesehen, das bei in die Aufnahme 51 eingesetzter Zelle 10 die zwei doppeltwirkenden Federkontaktstifte 53 und 54 kurzschließt. Auf diese Weise ist die Anwesenheit einer Testzelle 10 in einer Aufnahme 51 einfach detektierbar. Mittels der doppeltwirkenden Federkontaktstifte 53, 54 sind störende und anfällige Kabelverbindungen vermeidbar. In die Testzellenstation 50 ist vorteilhaft ein Datenlogger 56 zum Aufzeichnen der Messdaten integriert.

Der Aufbau der elektrochemischen Testzelle 10 entspricht insoweit der im Stand der Technik bereits unter dem Namen "PAT-Cell" verwendeten Testzelle 10, so dass diesbezüglich ausdrücklich auf die WO 2015/124198 A1 verwiesen wird, welche hinsichtlich des Aufbaus der Testzelle 10 zu dem Offenbarungsgehalt dieser Anmeldung hinzuzurechnen ist.

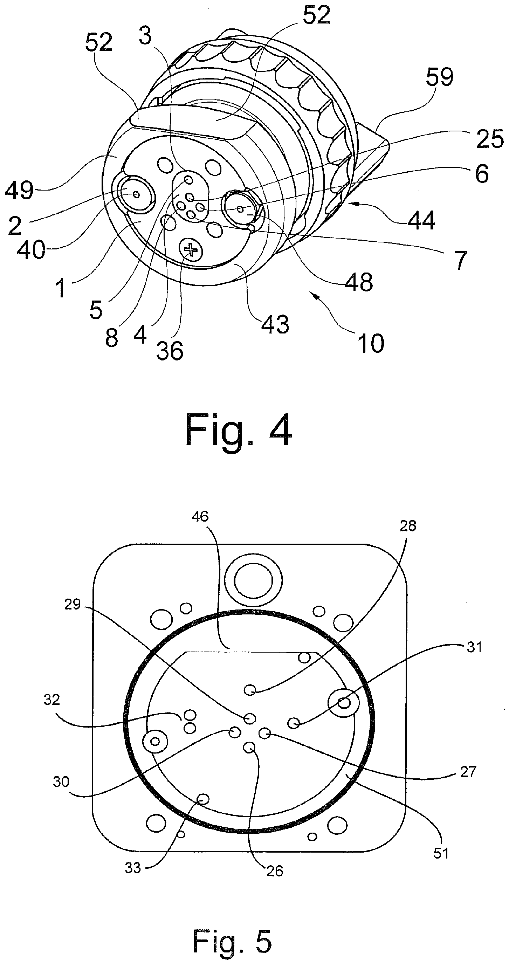

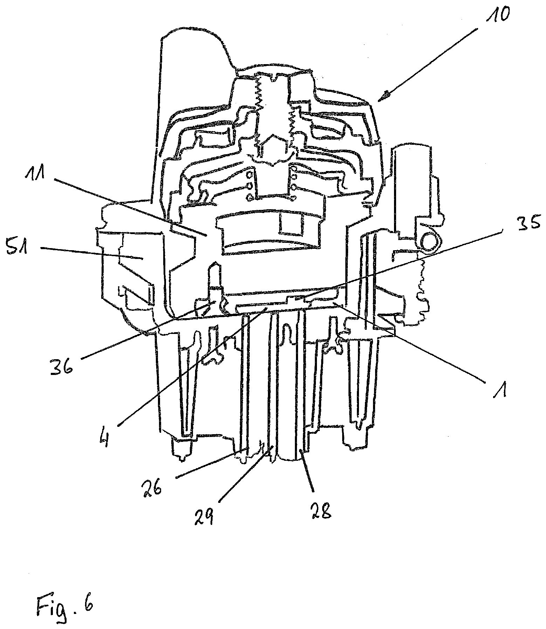

Erfindungsgemäß wurde die elektrochemische Testzelle 10 weiterentwickelt, indem ein Rahmenteil 1 vorgesehen ist, welches mittels einer Schraube 36 in dem Sockel 43 der Testzelle 10 befestigbar ist. Die weiterentwickelte elektrochemische Testzelle 10 ist in den Figuren 4 bis 6 zu erkennen. In dem Sockel 43 ist eine Aufnahme 2 mit einer formcodierten also nichtrunden Geometrie vorgesehen, in die der Referenzanschluss 40 und der Kontaktanschluss 48 hinein ragen. Das Rahmenteil 1 weist einen an die Form des Freiraums der Aufnahme 2 angepasste Außenkontur auf, so dass das Rahmenteil 1 in Verbindung mit der Befestigung durch die Befestigungsschraube 36 in ausschließlich einer Ausrichtung in der Testzelle 10 befestigt werden kann. Ferner weist das Rahmenteil 1 seinerseits eine unrunde, ovale Ausnehmung 3 auf, in der ein formkorrespondierendes Trägerteil 4 vorausgerichtet gehalten ist, wobei das Trägerteil 4 aufgrund der formcodierten Aufnahme des Rahmenteils 1 auch gegenüber der Testzelle 10 und insbesondere gegenüber der abgeflachten Oberfläche 52 des Sockels 43 ausgerichtet ist.

Auf der Innenseite des Trägerteils 4 ist ferner ein nichtflüchtiger, digitaler, elektronischer Datenspeicher 35 vorgesehen, so dass er zur Außenseite hin von dem Trägerteil 4 gegenüber äußeren mechanischen Einflüssen geschützt ist und die Kontaktierung der Testzelle 10 nicht eingeschränkt ist. Weiterhin können auf dem Trägerteil 4 zusätzlich ein Druck- und/oder Temperatursensor oder weitere Sensoren oder zumindest Kontaktanschlüsse für derartige Sensoren vorgesehen sein.

Die Aufnahme 2 und der Referenzanschluss 40 sowie der Kontaktanschluss 48 sind gegenüber der im Stand der Technik verwendeten und in der Figur 1 zu erkennenden Testzelle 10 unverändert, so dass auch bereits verwendete Testzellen 10 mit der erfindungsgemäßen Lösung nachgerüstet werden können, was insbesondere deshalb von Vorteil ist, da die Testzellen 10 nur in sehr kleinen Stückzahlen gefertigt werden und in der Herstellung sehr teuer sind. Zur Nachrüstung einer bereits verwendeten Testzelle 10 müssen nur das bisherige Rahmenteil 1 mit dem Kontaktelement 55 gegen ein neues Rahmenteil 1 mit einem Trägerteil 4 und einem darauf vorgesehenen Datenspeicher 35 ausgetauscht werden. Ferner wäre es auch denkbar, das Trägerteil 4 wegzulassen und die Kontakte 5, 6, 7, 8 und 25 einschließlich des Datenspeichers 35 direkt auf dem Rahmenteil 1 anzuordnen.

Die Testzellenstation 50 wurde ferner dadurch weiterentwickelt, indem in dem Boden der Aufnahme 51 entsprechende Gegenkontakte 26, 27, 28, 29, 30, 31, 32, 33 vorgesehen sind, welche derart angeordnet sind, dass die Testzelle 10 nach dem Einführen in die Aufnahme 51 aufgrund der Ausrichtung durch die abgeflachte Oberfläche 52 und den abgeflachten Vorsprung 46 daran automatisch mit den Kontakten 5, 6, 7, 8, 25, 40, 48 und 49 zur kontaktierenden Anlage gelangt.

Ferner ist in der Testzellenstation 50 ein serieller Datenbus in Form eines I2C-Busses vorgesehen. Ein I2C-Bus weist als Grundbestandteil eine serielle Datenleitung SDA und eine Taktleitung SCL auf, welche in der Figur 5 an den Gegenkontakten 30 und 27 anliegen und bei eingeführter Testzelle 10 mit den Kontakten 6 und 8 der Testzelle 10 in Kontakt stehen. Der I2C-Bus ist für die vorliegende Anwendung besonders geeignet, da er einen sehr einfachen Aufbau bei einer gleichzeitig ausreichenden Leistungsfähigkeit in Bezug auf die auszutauschenden Daten aufweist.

Aufgrund des vorgesehenen nichtflüchtigen Datenspeichers 35 ist die Testzelle 10 nicht nur Träger des zu prüfenden Batteriematerials, sondern zusätzlich noch Träger der auf das Batteriematerial bezogenen Daten bzw. die Testzelle 10 kennzeichnenden Daten, wobei die Daten aufgrund des elektronischen Datenspeichers zusätzlich in einer weiter verarbeitbaren Form gespeichert sind. Der Datenspeicher 35 ist hier bevorzugt ein I2C-EEPROM Speicher, welcher elektronisch wiederbeschreibbar und nichtflüchtig ist, d.h. die Daten können sowohl in den Datenspeicher 35 geschrieben, aus diesem ausgelesen als auch wieder gelöscht werden, wobei die Daten auch bei fehlender Energiezufuhr erhalten bleiben.

Das bisher verwendete Kontaktelement 55 zur Detektierung der Anwesenheit einer Testzelle 10 in einer Aufnahme 51 der Testzellenstation 50 ist in der weiterentwickelten Testzelle 10 entfallen, da die Anwesenheit hier auch durch einen Datenaustausch über den seriellen Datenbus der Testzellenstation 50 detektiert wird.

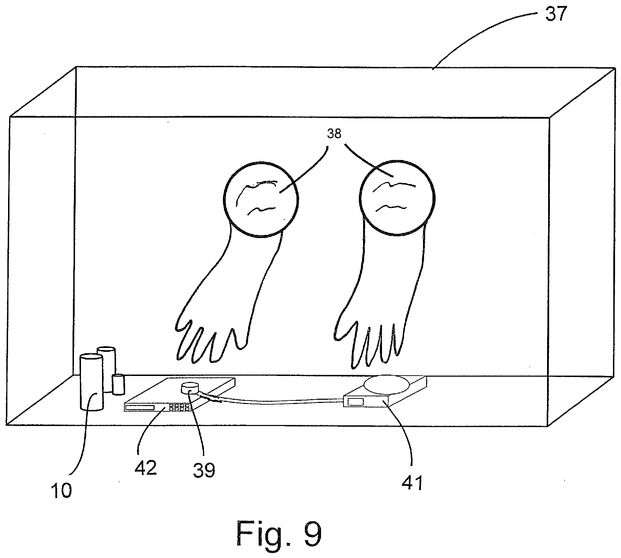

In der Figur 9 ist eine weiterentwickelte Arbeitsstation zu erkennen, welche eine gasdichte Handschuhbox 37 mit einer Gasbefüllung einer definierten Zusammensetzung, wie z.B. mit einem Inertgas umfasst. Die Handschuhbox 37 umfasst ferner zwei in die Handschuhbox 37 hinein ragende Handschuhe 38, welche gasdicht mit der Handschuhbox 37 verbunden sind. Selbstverständlich ist der Innenraum der Handschuhbox 37 über eine nicht dargestellte Klappe oder Schleuse von außen zugänglich und über einen nicht dargestellten Gasanschluss mit Gas befüllbar.

In der Handschuhbox 37 sind ein Aufnahmeteil 39, welches im Hause der Anmelderin auch als "PAT-Terminal" bezeichnet wird, zur Aufnahme einer Testzelle 10 mit einer Eingabeeinrichtung 42 und eine Waage 41 vorgesehen, welche über Signalleitungen miteinander kontaktiert sind. In dem Aufnahmeteil 39 ist eine formcodierte Aufnahme mit einer Anzahl von entsprechenden Gegenkontakten vorgesehen, an denen zumindest die zur Datenübertragung erforderlichen Kontakte der Testzelle 10 beim Einsetzen zur Anlage gelangen. Ferner sind in der Handschuhbox 37 eine Mehrzahl von zu befüllenden Testzellen 10 vorhanden. Die Eingabeeinrichtung 42 umfasst zusätzlich ein Display, auf dem die eingegebenen Daten zur Kontrolle angezeigt werden. Ferner können auf dem Display zusätzlich Handlungsanweisungen angezeigt werden, welche Elektroden zu verwenden sind und welche Mengen an Elektrolyt, Batteriematerial oder Separator vorzusehen sind. Ferner können zusätzliche Handlungsanweisungen angezeigt werden, was bei der Präparation der Testzelle 10 zu beachten ist. Neben dem Display umfasst die Eingabeeinrichtung 42 ein Tastaturfeld mit einer entsprechenden Anzahl von Tasten zur Eingabe der Daten. Alternativ kann zur Eingabe auch ein vereinfachter Dreh-Drückschalter vorgesehen sein, welcher zur Menüführung und Dateneingabe vorgesehen ist. Dabei wird die Dateneingabe hier durch die Auswahl der Daten des Menüs durch Drehen des Dreh-Drückschalters und Bewegen einer Aktivierungsfläche auf eine bestimmte Schaltfläche des Displays und Drücken des Dreh-Drückschalters zur Aktivierung der Schaltfläche vorgenommen.

Die Befüllung einer Testzelle 10 mit Batteriematerial erfolgt in der Handschuhbox 37 unter den definierten Raumbedingungen entsprechend der in der WO 2015/124198 A1 beschriebenen Handhabung.

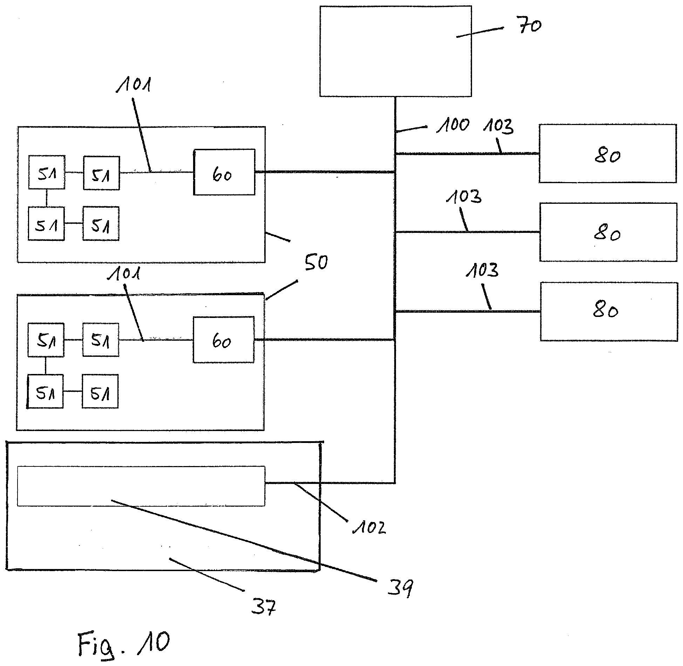

In der Figur 10 ist beispielhaft ein Netzwerk mit einem seriellen Datenbus 100 zu erkennen. Zunächst ist ein zentraler Server 70 vorgesehen, an den der Datenbus 100 angeschlossen ist, und in dem die Daten gespeichert und verwaltet werden. Ferner sind an den Datenbus 100 über entsprechende Netzwerkkabel 103 verschiedene PC's 80 angeschlossen. Weiterhin ist die Handschuhbox 37 mit dem darin angeordneten Aufnahmeteil 39, welches auch als "PAT-Terminal" bezeichnet wird, über ein weiteres Netzwerkkabel 102 mit dem Datenbus 100 verbunden. Die Verbindung zwischen dem Aufnahmeteil 39 ("PAT-Terminal") und dem Datenbus 100 bzw. dem Server 70 kann aber auch drahtlos verwirklicht sein, so dass die aufwendige Kabeldurchführung durch die Wandung der gasdichten Handschuhbox 37 entfällt. Ferner sind in der Darstellung zwei Testzellenstationen 50 vorgesehen, welche bei der Anmelderin als "PAT-Tray" oder "PAT-Cycler" bezeichnet werden und eine Vielzahl von Aufnahmen 51 aufweisen, in denen jeweils eine Testzelle 10 aufnehmbar ist. In jeder der Testzellenstationen 50 ist ein lokaler Server 60 vorgesehen, welcher jeweils über einen Teilabschnitt 102 eines seriellen Datenbusses mit den Aufnahmen 51 einerseits und andererseits dem zentralen Datenbus 100 und damit auch mit dem zentralen Server 70 verbunden ist.

Die bei der Anmelderin als "PAT-Cycler" bezeichnete, weiterentwickelte Testzellenstation 50 umfasst gegenüber der als "PAT-Tray" bezeichneten Testzellenstation 50 zusätzlich eine wärmeisolierte Temperaturkammer mit einer steuerbaren Kühl-/ Heizeinrichtung und eine Batterietestvorrichtung. Der "PAT-Cycler" kann bezüglich der vorgeschlagenen Erfindung ohne Änderungen statt des in der Figur 2 gezeigten "PAT-Trays" als Testzellenstation 50 verwendet werden. Die als "PAT-Cycler" bezeichnete Testzellenstation 50 ist in der zum Zeitpunkt des Anmeldetages dieser Anmeldung noch nicht veröffentlichten Anmeldung mit dem Aktenzeichen PCT/EP2016/062782 beschrieben.

Die Präparation der Testzellen 10 erfolgt nun dadurch, indem die den individuellen Testzellen 10 "ABC" zugeordneten Daten wie z.B. die Elektrodentypen, das Batteriematerial in der Art und Menge, das Elektrolyt in der Art und Menge und erforderlichenfalls weitere Daten zuerst über einen der PC'S 80 und ein darauf vorhandenes Softwareprogramm eingegeben und in dem Server 70 gespeichert werden.

Anschließend werden die Testzellen 10 in der Handschuhbox 37 einzeln in das Aufnahmeteil 39 eingesetzt. Die Testzelle 10 weist in ihrem Datenspeicher 35 bereits eine entsprechende Kennung in Form eines individualisierten Datenpaketes auf, anhand dessen das Aufnahmeteil 39 bzw. der Server 70 die Testzelle 10 als Testzelle "ABC" erkennt. Daraufhin wird in dem Server 70 der der Testzelle "ABC" zugeordnete Datensatz aufgerufen und an der Anzeigeeinrichtung der Eingabeeinrichtung 42 zur Anzeige gebracht. Der Bediener kann dann anhand der angezeigten Daten erkennen, wie die Testzelle 10 präpariert werden soll. Dabei kann die Anzeige des Datensatzes in sukzessiver Abfolge der Einzeldaten mit dazwischen vorgesehenen Aufforderungen zur Eingabe der Ist-Werte oder reinen Bestätigungen ausgebildet sein, der Bediener kann dadurch praktisch durch den Präparationsvorgang geführt werden. Alternativ kann der Datensatz auch mit allen Daten gleichzeitig zur Anzeige gebracht werden. Ferner wäre es auch denkbar, die Testzelle 10 anhand der Daten vollautomatisch oder zumindest teilautomatisch mit in der Handschuhbox 37 vorgesehenen Bestückungseinrichtungen zu präparieren.

Die individuellen Bestückungsdaten können dann entweder in dem Datenspeicher 35 der Testzelle 10 oder auch auf dem Server 70 gespeichert werden.

Nach der Präparierung der Testzelle 10 wird diese aus der Handschuhbox 37 entnommen und in eine der Aufnahmen 51 der Testzellenstation 50 eingesetzt. In der Aufnahme 51 der Testzellenstation 50 werden die zur Durchführung der Tests erforderlichen Daten aus dem Datenspeicher 35 ausgelesen und über den seriellen Datenbus 101, den lokalen Server 60 und den übergeordneten Datenbus 100 dem zentralen Server 70 zugeleitet. Ferner werden damit auch die ermittelten Messwerte unter Zuordnung zu der individuellen Testzelle 10 dem zentralen Server 70 zugeführt. Sofern die der Testzelle 10 zugeordneten Daten der Elektrodentypen, der indviduellen Ist-Werte des Batteriematerials und des Elektrolyts nicht in dem Datenspeicher 35 der Testzelle 10 gespeichert sind, sondern stattdessen in einem der Testzelle "ABC" zugeordneten Datensatz gespeichert sind, können die Daten auch nach dem Erkennen der Testzelle "ABC" in der Aufnahme 51 der Testzellenstation 50 auch von dem Server 70 aufgerufen werden. Sofern die Daten erforderliche Daten zur Durchführung der Testreihe, wie z.B. Zeitdauer oder Temperatur, umfassen, können diese auch zur Steuerung der Testzellenstation 50 genutzt werden.

Statt des über den seriellen Datenbus 100 mit dem daran angeschlossenen Unterabschnitt des Datenbusses 101 und den Netzwerkkabeln 102 und 103 verwirklichten Netzwerkes kann auch ein vollständig drahtloses Netzwerk verwendet werden. Ferner ist es auch denkbar, die Daten teilweise auf dem Datenspeicher 35 der Testzelle 10 zwischen zu speichern. So ist es z.B. denkbar, die Testzellen 10 mit dem zu testenden Batteriematerial und Elektrodensatz in einer Handschuhbox 37 an einem Ort vorzubereiten und dann nach der Vorbereitung an einen anderen Ort zu verschicken, an dem die Tests durchgeführt werden. Die Testzellen 10 sind in diesem Fall nicht nur Träger ihrer Kennung, sondern zusätzlich auch Träger der die individuelle Bestückung kennzeichnenden Daten.

Der Anwender startet die Vorbereitung der Testzellen 10 dadurch, indem er die Messreihe durch Starten einer entsprechenden Software in seinem PC vorbereitet und einer entsprechenden Anzahl von Testzellen 10 in einem Programm bestimmten Elektroden und eine entsprechende Menge von Batteriematerial, Separatoren und Elektrolyten zur Befüllung zuweist. Die Testzellen 10 sind damit durch die Datenzuweisung praktisch individualisiert. Anschließend werden die entsprechend vorbereiteten Testzellen 10 in die Handschuhbox 37 gegeben und die definierten Gasbedingungen in der Handschuhbox 37 hergestellt. Sind die Bedingungen erreicht, so ergreift der Anwender eine der Testzellen 10 und stellt sie in das Aufnahmeteil 39 den sogenannten "PAT-Terminal". Das Aufnahmeteil 39 erkennt daraufhin die Testzelle 10 durch das Auslesen der Daten aus dem Datenspeicher 35 und zeigt auf einem Display eine entsprechende Meldung "Testzelle ABC erkannt" an. Ferner werden die einzugegebenden Sollwerte der Befüllung angezeigt, wie z.B. "Anode TZ-ABC: 10mg, Kathode TZ-ABC: 10 mg, Separator ABC-123, Elektrolyt: Superlyt 2000, 10 *µ*l". In einem nächsten Schritt wird der Anwender aufgefordert, die Anode vor der Befüllung auf die Waage 41 zu legen. Die Waage 41 zeigt das Ist-Gewicht an, so dass das Gewicht der Anode während des Befüllvorganges kontrolliert werden kann. Dabei wird zur Erleichterung des Befüllvorganges neben dem Ist-Gewicht zusätzlich das Zielgewicht angezeigt (z.B. "Material XY123, Zielgewicht 10 mg, aktuelles Gewicht 10,11 mg"). Anschließend kann die Anode nach dem Befüllvorgang und dem Protokollieren der Daten in die Testzelle 10 eingesetzt werden, wobei das aktuelle Gewicht des Batteriematerials in dem Datenspeicher 35 oder auf dem Server 70 gespeichert wird. Dieser Vorgang wird solange wiederholt, bis die Testzelle 10 mit sämtlichen für den Versuch erforderlichen Materialien versehen ist.

Anschließend werden die Testzellen 10 nach dem Befüllen aus der Handschuhbox 37 entnommen und in die Testzellenstation 50 eingesetzt, welche die Daten ebenfalls aus dem Datenspeicher 35 ausliest und die jeweilige Testzelle 10 erkennt.

Der "PAT-Cycler", der "PAT-Terminal", als auch der "PAT-Tray" und die "PAT-Cell" einschließlich der Waage 41 können vorzugsweise über WLAN, z.B. Ethernet mit einem PC-Netzwerk verbunden sein. Die verschiedenen Testzellen 10 sind hingegen über einen I2C-Bus zum Datenaustausch mit dem "PAT-Cycler" verbunden. Jede der Aufnahmen 51 mit den darin gehaltenen Testzellen 10 steht über einen seriellen Datenbus RS-485 mit einem internen Server in dem "PAT-Cycler" in Verbindung, wobei jeder Aufnahme zusätzlich ein Mikrocontroller zugeordnet sein kann, in dem die Messdaten entsprechend umgewandelt werden können. Da die Daten jeder Testzelle 10 individuell zugewiesen und in digitaler Form in der Testzelle 10 selbst oder durch Zuordnung zu der individuellen Kennung in dem Datensatz auf dem Server 70 gespeichert sind, kann die Wahrscheinlichkeit eines Vertauschens der zugewiesenen Daten und damit einer fehlerhaften Messwertzuordnung wesentlich reduziert werden. Ferner können die Daten in digitaler Form mit einer sehr hohen Genauigkeit gespeichert und weiter verarbeitet werden. Außerdem können die Vorbereitung der Testzellen 10 und die Datenprotokollierung vollständig in der Handschuhbox 37 vorgenommen werden, so dass der Anwender nicht ständig neu in die Handschuhbox 37 eingreifen muss. Damit kann die erforderliche Zeitspanne zur Vorbereitung der Testzellen 10 erheblich verkürzt werden.

Ein weiterer sich durch die Erfindung ergebender Vorteil ist darin zu sehen, dass die Testzellen 10 automatisiert bestückt und vorbereitet werden können, wodurch der menschliche Faktor und die damit verbundene Fehlerwahrscheinlichkeit reduziert werden können. Dadurch kann die erforderliche Arbeitszeit zur Vorbereitung der Testzellen 10 verringert werden. Außerdem kann dadurch eine Reproduzierbarkeit der Messergebnisse erreicht werden.

## Patentansprüche

1. Elektrochemische Testzelle (10) zum Testen von Batteriematerial, umfassend
- einen ersten Stromsammler (12),
- einen zweiten Stromsammler (13) und
- eine zwischen dem ersten und dem zweiten Stromsammler angeordnete Elektrodenanordnung (17) mit einer Arbeitselektrode (18), einer Gegenelektrode (19) und einem mit Batteriematerial gefüllten Referenzelektrodeneinsatz (14),
wobei
- in der elektrochemischen Testzelle (10) ein nichtflüchtiger, digitaler, elektronischer Datenspeicher (35) vorgesehen ist, und
- wenigstens ein von außen zugänglicher, mit dem Datenspeicher (35) elektrisch verbundener oder verbindbarer Kontakt (5, 6, 7, 8, 25) vorgesehen ist, und
- eine formcodierte Aufnahme (2) vorgesehen ist, und
- ein Rahmenteil (1) mit einer an die Form der Aufnahme (2) angepassten Formgebung und einer nichtrunden Ausnehmung (3) vorgesehen ist, und
- der nichtflüchtige Datenspeicher (35) auf einem Trägerteil (4) angeordnet ist, welches eine an die Form der Ausnehmung (3) angepasste Außengeometrie aufweist und in der Ausnehmung (3) angeordnet ist, und
- der Kontakt (5, 6, 7, 8, 25) an dem Trägerteil (4) angeordnet ist.

2. Elektrochemische Testzelle (10) nach Anspruch 1, **dadurch gekennzeichnet, dass**
- der Datenspeicher (35) ein EEPROM ist.

3. Elektrochemische Testzelle (10) nach einem der Ansprüche 1 oder 2, **dadurch gekennzeichnet, dass**
- der nichtflüchtige Speicher (35) für eine Drahtloskommunikation eingerichtet ist.

4. Elektrochemische Testzelle (10) nach einem der vorangegangenen Ansprüche, **dadurch gekennzeichnet, dass**
- in der elektrochemischen Testzelle (10) ein den Druck in einem zu prüfenden Batteriematerial detektierender Drucksensor und/oder ein die Temperatur des zu prüfenden Batteriematerials detektierender Tempertatursensor vorgesehen sind.

5. Elektrochemische Testzelle (10) nach Anspruch 4, **dadurch gekennzeichnet, dass**
- der Drucksensor und/oder der Temperatursensor auf dem Trägerteil (4) angeordnet sind.

6. Elektrochemische Testzelle (10) nach Anspruch 4 oder nach Anspruch 5, **dadurch gekennzeichnet, dass** der Drucksensor und/oder Temperatursensor mit einem an dem Trägerteil (4) angeordneten, von außen zugänglichen elektrischen Kontakt (5, 6, 7, 8, 25) verbunden ist.

7. Elektrochemische Testzelle (10) nach Anspruch 6, **dadurch gekennzeichnet, dass**
- der elektrische Kontakt (5, 6, 7, 8, 25) über eine serielle Datenverbindung mit wenigstens dem Drucksensor und dem Temperatursensor verbunden ist.

## Claims

1. Electrochemical test cell (10) for testing battery material, comprising
- a first current collector (12),
- a second current collector (13) and
- an electrode arrangement (17) which is arranged between the first and the second current collector and has a working electrode (18), a counter electrode (19) and a reference electrode insert (14) filled with battery material, wherein
- a non-volatile, digital, electronic data memory (35) is provided in the electrochemical test cell (10), and
- at least one externally accessible contact (5, 6, 7, 8, 25) that is or can be electrically connected to the data memory (35) is provided, and
- a shape-coded receptacle (2) is provided, and -a frame part (1) having a shaping adapted to the shape of the receptacle (2) and a non-circular recess (3) is provided, and
- the non-volatile data memory (35) is arranged on a carrier part (4) that has an external geometry adapted to the shape of the recess (3) and is arranged in the recess (3), and
- the contact (5, 6, 7, 8, 25) is arranged on the carrier part (4).

2. Electrochemical test cell (10) according to claim 1, **characterised in that** the data memory (35) is an EEPROM.

3. Electrochemical test cell (10) according to either claim 1 or claim 2, **characterised in that** the non-volatile memory (35) is set up for wireless communication.

4. Electrochemical test cell (10) according to any of the preceding claims, **characterised in that** a pressure sensor which detects the pressure in a battery material that is to be tested and/or a temperature sensor which detects the temperature of the battery material that is to be tested are provided in the electrochemical test cell (10).

5. Electrochemical test cell (10) according to claim 4, **characterised in that** the pressure sensor and/or the temperature sensor are arranged on the carrier part (4).

6. Electrochemical test cell (10) according to either claim 4 or claim 5, **characterised in that** the pressure sensor and/or the temperature sensor are connected to an externally accessible electrical contact (5, 6, 7, 8, 25) that is arranged on the carrier part (4).

7. Electrochemical test cell (10) according to claim 6, **characterised in that** the electrical contact (5, 6, 7, 8, 25) is connected to at least the pressure sensor and the temperature sensor via a serial data link.

## Revendications

1. Cellule d'essai électrochimique (10) destinée à tester un matériau de batterie, comprenant
- un premier accumulateur (12),
- un second accumulateur (13) et
- un agencement d'électrodes (17) disposé entre le premier et le second accumulateur, doté d'une électrode de travail (18), d'une contre-électrode (19) et d'un insert à électrode de référence (14) rempli de matériau de batterie,
dans laquelle
- une mémoire de données (35) électronique, numérique et non volatile est prévue dans la cellule d'essai électrochimique (10), et
- au moins un contact (5, 6, 7, 8, 25) relié ou pouvant être relié électriquement à la mémoire de données (35), accessible par l'extérieur est prévu, et
- un logement (2) à codage de forme est prévu, et
- une partie de cadre (1) dotée d'un façonnage adapté à la forme du logement (2) et d'un évidement (3) non rond est prévue, et
- la mémoire de données (35) non volatile est disposée sur une partie de support (4), qui présente une géométrie extérieure adaptée à la forme de l'évidement (3) et qui est disposée dans l'évidement (3), et
- le contact (5, 6, 7, 8, 25) est disposé sur la partie de support (4).

2. Cellule d'essai électrochimique (10) selon la revendication 1, **caractérisée en ce que**
- la mémoire de données (35) est une mémoire EEPROM.

3. Cellule d'essai électrochimique (10) selon la revendication 1 ou 2, **caractérisée en ce que**
- la mémoire (35) non volatile est conçue pour une communication sans fil.

4. Cellule d'essai électrochimique (10) selon l'une des revendications précédentes, **caractérisée en ce que**
- un capteur de pression détectant la pression dans un matériau de batterie à tester et/ou un capteur de température détectant la température du matériau de batterie à tester sont prévus dans la cellule d'essai électrochimique (10).

5. Cellule d'essai électrochimique (10) selon la revendication 4, **caractérisée en ce que**
- le capteur de pression et/ou le capteur de température sont disposés sur la partie de support (4).

6. Cellule d'essai électrochimique (10) selon la revendication 4 ou selon la revendication 5, **caractérisée en ce que** le capteur de pression et/ou le capteur de température est relié à un contact (5, 6, 7, 8, 25) électrique accessible par l'extérieur et disposé sur la partie de support (4).

7. Cellule d'essai électrochimique (10) selon la revendication 6, **caractérisée en ce que**
- le contact (5, 6, 7, 8, 25) électrique est relié au moins au capteur de pression et au capteur de température par le biais d'une liaison de données série.
